Europäisches Patentamt

European Patent Office

Office européen des brevets

(19)

(11) Veröffentlichungsnummer: **0 316 789 B1**

# EUROPÄISCHE PATENTSCHRIFT

(12)

(45) Veröffentlichungstag der Patentschrift: **22.07.92**

(21) Anmeldenummer: **88118794.2**

(22) Anmeldetag: **11.11.88**

(51) Int. Cl.⁵: **B60N 2/00**, B60N 2/06

(54) Verstellbares Kraftübertragungselement mit trägheitssensitiver Blockierung.

(30) Priorität: **14.11.87 DE 3738797**

(43) Veröffentlichungstag der Anmeldung:
**24.05.89 Patentblatt 89/21**

(45) Bekanntmachung des Hinweises auf die
Patenterteilung:
**22.07.92 Patentblatt 92/30**

(84) Benannte Vertragsstaaten:
**BE DE ES FR GB IT NL SE**

(56) Entgegenhaltungen:
**EP-A- 0 242 859**
**EP-A- 0 245 650**
**US-A- 3 828 893**

(73) Patentinhaber: **P.A. Rentrop, Hubbert & Wagner Fahrzeugausstattungen GmbH & Co. KG**
**Nordsehler Strasse 38**
**W-3060 Stadthagen(DE)**

(72) Erfinder: **Ernst, Hans-Hellmut**
**Bismarckallee 50**
**W-2070 Ahrensburg(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**W-4800 Bielefeld 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein verstellbares Kraftübertragungselement mit trägheitssensitiver Blockierung, insbesondere für den Einsatz in Fahrzeugen, zum Abfangen schwerer Massen bei Verzögerungen im Gefahrenfall, mit zwei linear gegeneinander verschiebbaren Lastträgern und einer Sensormasse, die sich bei Verzögerung trägheitsbedingt gegen die Kraft einer Sensorfeder bewegt.

Ein bekanntes derartiges Kraftübertragungselement (EP-A-0 242 859) dient als Rückhalteeinrichtung für Sitze von Personenkraftwagen. Die Sitze von Personenkraftwagen sind zur Einstellung der gewünschten Sitzposition in der Höhe, in der Fahrzeuglängsrichtung und in der Rückenlehnenneigung entweder mit elektrisch angetriebenen Verstellsystemen oder mit manuell betätigbaren Verstellsystemen ausgerüstet. Die Kräfte, die von diesen aus Kosten- und Gewichtsgründen sehr leicht auszuführenden Verstellsystemen aufgenommen werden können, sind häufig nicht ausreichend groß, um bei plötzlichen Änderungen der Fahrzeuggeschwindigkeit Notbremsungen oder Aufprall zu verhindern, daß sich die Fahrzeugsitze aus den Halterungen an den vorgesehenen Fahrzeugstellen lösen können. Dies gilt insbesondere bei am Sitz oder an der Sitzbefestigung angreifenden Sicherheitsgurten.

Bei dem bekannten Kraftübertragungselement wird die Sensormasse durch die Blockierkörper selbst gebildet. Die Doppelfunktion der Blockierkörper führt zu erheblichen Beschränkungen bei dem Ziel, ein wirksames, kleinbauendes und preisgünstig herstellbares Kraftübertragungselement zu schaffen.

Der Erfindung liegt die Aufgabe zugrunde, ein einfach ausgebildetes Kraftübertragungselement zu schaffen, welches bei schnellen positiven oder negativen Beschleunigungen für eine schnelle und wirksame Blockierung der im Fahrzeug verschieblichen Masse geeignet ist. Das Kraftübertragungselement soll insbesondere für Fahrzeugsitze geeignet sein und diese in ihrer jeweils bei Beginn des vorzugsweise negativen Beschleunigungsvorgangs bestehende Position gegenüber der Umgebung unverzüglich und direkt arretieren.

Die Lösung dieser Aufgabe erfolgt mit den Merkmalen des Kennzeichnungsteils des Patentanspruchs 1. Bevorzugte Ausgestaltungen der Erfindung sind in den Unteransprüchen beschrieben.

Die Erfindung schafft eine Einrichtung, die im Gefahrenfall, beispielsweise bei einem Auffahrunfall eine verschiebbare Masse -vorzugsweise einen Fahrzeugsitz mit Benutzer- gegenüber der Fahrzeugzelle in der jeweiligen Ausgangsposition unter Lastübertragung arretiert. Diese Arretierung setzt als Klemmblockierung von Lamellen auf einem Lastträger unmittelbar ein. Ausgelöst wird die Blockierung dabei von trägheitssensitiv auf positive oder negative Beschleunigungen ansprechenden Sensormassen.

Nachstehend werden anhand der Zeichnung bevorzugte Ausführungsbeispiele der Erfindung beschrieben. Es zeigen:

Figur 1 ein vertikal verstellbares Kraftübertragungselement,

Figur 2 ein horizontal verstellbares Kraftübertragungselement in nicht blockierter Stellung,

Figur 3 das Element gemäß Figur 2 in blockierter Stellung,

Figur 4 ein Kraftübertragungselement innerhalb einer Sitzlängsverstellung,

Figur 5 ein Kraftübertragungselement mit einem Kugelsensor als Auslösemechanik

Figur 6 ein Kraftübertragungselement mit einer auszugssensitiven Auslösevorrichtung.

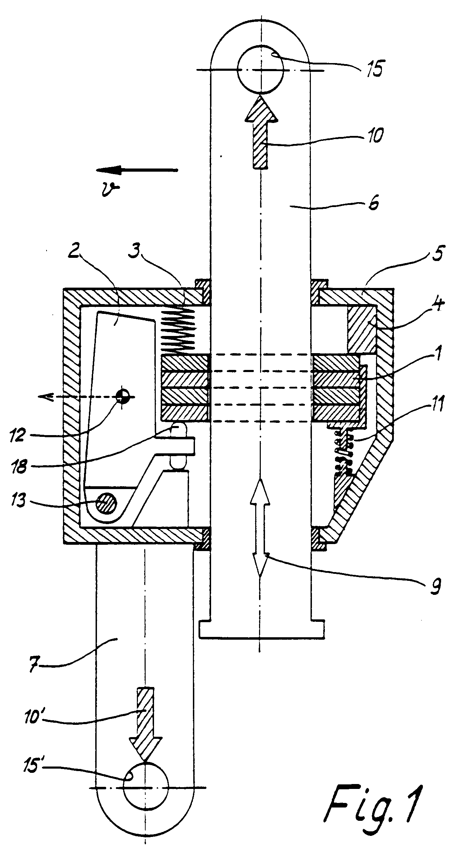

Als Anwendungsbeispiel sei ein Kraftfahrzeugsitz genannt, in dem der Sicherheitsgurt vollständig integriert ist. Bei einem Unfall müssen bei einer solchen Konstruktion sehr hohe Kräfte vom Sitz in die Fahrzeugzelle abgeleitet werden. Zur Erfüllung dieser Forderung werden hohe Anforderungen an die Ausbildung der Sitzverstellelemente gestellt. Eine für den Kraftfluß im Falle eines Auffahrunfalls ausreichende Dimensionierung der Sitzverstell- und Antriebselemente müßte sehr schwere, großvolumige und teure Bauteile ergeben. Hier ist eine Anwendung der Erfindung sehr vorteilhaft. Das Kraftübertragungselement der Figur 1 wird zum Beispiel im Zusammenhang mit der Sitzhöhenverstellung mit seinem oberen Befestigungsauge 15 der Zugstange 6 am hinteren Sitzrahmen rechts und links befestigt. Am gleichen Befestigungspunkt 15 können auch das Schloß und der Beckengurtendbeschlag des Sicherheitsgurts befestigt werden.

Das untere Befestigungsauge 15′ des Lastträgers 7, der mit dem Gehäuse 5 zum Kraftübertragungselement gehört, wird am linear auf der Sitzschiene verfahrbaren Schlitten befestigt. Im normalen Gebrauchszustand, beim Hoch- und Runterfahren des Sitzes, wird die Zugstange 6 leichtgängig durch das Kraftübertragungselement verfahren. Zugstange 6 und Lastträger 7 werden relativ zueinander ohne nennenswerten Widerstand verschoben.

Im Unfall, insbesondere im Frontalcrash, gilt es, die enormen Massenverzögerungskräfte 10 über das dann blockierte Kraftübertragungselement abzufangen und über die Sitzschiene sicher in den Fahrzeugboden zu leiten. Dieser Blockiervorgang läuft folgendermaßen ab: Die Verzögerungskräfte wirken auch auf den Schwerpunkt 12 der Sensormasse 2 in Fahrtrichtung = Aufprallrichtung v. Die Sensormasse 2 verschwenkt dabei aus ihrer Ruhestellung nach links und kippt über den Drucknokken 19 die zu einem Paket zusammengefaßten Lamellen an. Dabei bestimmt die Kraft der Sensorfeder 3, bei welcher Verzögerungsschwelle (z.B. 1,5g) die Blockierung eingeleitet wird. Das Ankippen der Lamellen 1 in den Blockierzustand erfolgt unverzüglich, direkt und stufenlos, also ohne Wegverlust. D.h., wenn die Auszugskraft 10 in der Zugstange 6 vorliegt, findet kein wegmäßiger Auszug statt, wie dies beispielsweise bei einer bekannten Sägezahnverrastung der Fall wäre. Die schräggestellten Lamellen nehmen sofort die Last auf und leiten sie über den Anschlag 4 in das Gehäuse 5. Von dort aus gelangen sie über den Lastträger 7 in den nicht dargestellten Schlitten der Sitzlängsverstellung. Nach der Entlastung kehren alle Teile in die dargestellte Ruhestellung zurück.

Die Anwendungsmöglichkeiten für ein solches Kraftübertragungselement sind überall dort gegeben, wo Massen gleichförmig verschoben werden und bei außergewöhnlichen Bewegungen eine Sperrung erfolgen soll. Die Einsatzbeschreibung für einen Kfz-Sitz ist dabei als aktuelles und sinnvolles Beispiel zu verstehen.

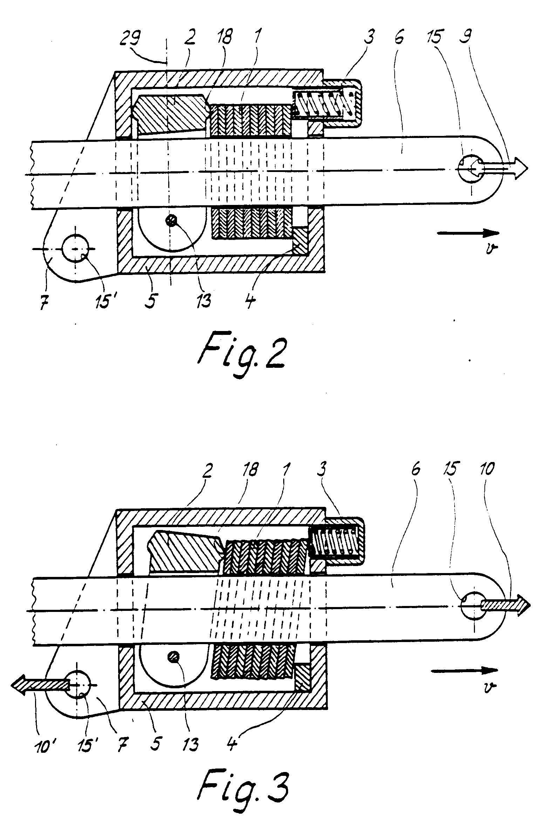

Die Fig. 2 und 3 zeigen ein Kraftübertragungselement für den Anwendungsfall einer horizontalen Verschiebung. Um beim Beispiel des Kfz-Sitzes zu bleiben, könnte die Zugstange 6 eine bei der Sitzlängsverstellung mit dem Sitz mitfahrende Lastschiene sein. Das Kraftübertragungselement wäre dann mit dem Befestigungsausge 15' mit dem Fahrzeugboden verbunden.

Beim Frontalcrash in Richtung v schwenkt die Sensormasse 2 nach rechts aus und kippt die Lamellen 1 gegen die Kraft der Sensorfeder 3 in die Blockierlage. Die nach vorne gerichteten Kräfte 10 aus dem Sitz werden von der Zugschiene 10 über die klemmenden Lamellen 1 in das Gehäuse 5 geleitet und somit in den Kfz-Boden. Die Verstell- und Antriebselemente für den Sitz werden nicht belastet und können deshalb leicht, klein und kostengünstig ausgeführt werden. Hier findet also eine Blockierung sowohl beim Heckaufprall, als auch beim Frontalcrash statt.

Die Kraftübertragungsstange 6 kann auch auf Druck belastet werden, wenn das Kraftübertragungselement um die Symmetrieachse 29 links mit einem zweiten Lamellenpaket ausgestattet wird. Die Sensormasse 2 würde dann sowohl nach rechts als auch nach links ausschwenken können.

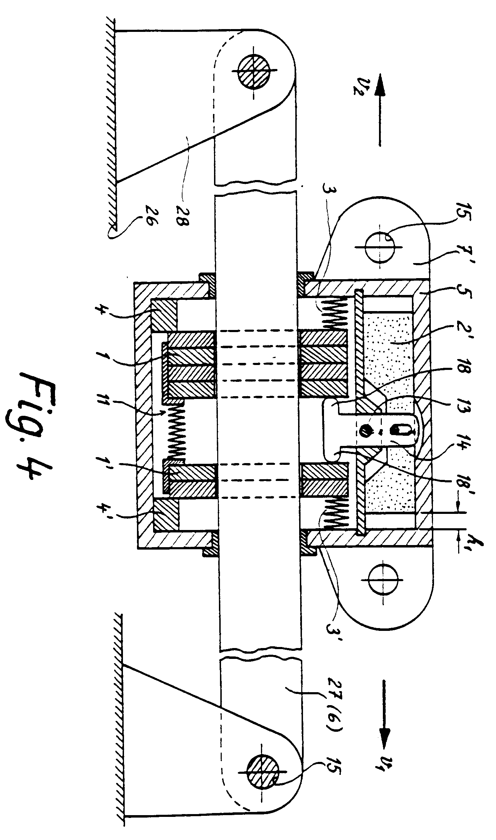

Eine Bewegungsumkehr dieses Systems ist in der Fig. 4 dargestellt. Die Zugstange 6 ist hier die starr mit dem Kfz-Boden 26 verbundene Sitzschiene 27. Der längsverstellbare Schlitten (nicht dargestellt) ist über die Befestigungsaugen 15' mit dem blockierbaren Kraftübertragungselement verbunden. (Bzw. das Gehäuse 5 selbst ist der längsverfahrbare Schlitten).

Im normalen Gebrauchszustand wird der Schlitten und somit der Sitz in Längsrichtung $v_1$ - (Fahrtrichtung) und $v_2$ (gegen die Fahrtrichtung) z.B. von einem einfachen Gewinde-Spindel-Antrieb stufenlos verfahren. Eine Verrastung erfolgt nicht.

Die niedrigen Gebrauchskräfte können vom Verstellantrieb aufgenommen werden.

Im Unfall setzt eine stufenlose (oder besser stufenfreie) Blockierung des Kraftübertragungselements ein. Bei der gezeigten Ausführung können sowohl Unfallkräfte des Heckaufpralls über 2 Klemmlamellen 1 und als auch des stärkeren Frontalcrashs über 4 Lamellen 1 abgefangen werden. Hier zeigt sich eindrucksvoll, daß die Höhe der zu übertragenden Kraft sehr einfach über die Anzahl der Lamellen beherrscht werden kann.

Als Sensormasse $2'$ fungiert hier ein linear in den Richtungen $v_1$ und $v_2$ verschiebbar angeordneter schwerer Körper. Über einen Zapfen ist er mit einem Langloch eines Sensorhebels 14 verbunden, der schwenkbar im Sensorlager 13 befestigt ist.

Beim Frontalcrash schlägt die Sensormasse $2'$ in Richtung $v_1$ aus und nimmt dabei den Sensorhebel 14 mit. Mit dem Drucknocken 18 werden sodann die vier Lamellen 1 gegen die Kraft der Sensorfeder 3 angekippt und in die Blockierstellung gebracht.

Beim Heckaufprall treten Verzögerungskräfte in entgegengesetzter Richtung auf, die dann entsprechend von den beiden blockierten Lamellen $1'$ abgefangen werden.

Da durch die Verstell- und Antriebselemente des Sitzes zu Beginn des Unfalls eine gewisse Last übertragen werden kann, ergibt sich die zeitliche Möglichkeit für die Aktivierung der Blockierung im Kraftübertragungselement, bevor eine nennenswerte Last aufgebaut ist. Da die Blockierung über die Lamellen unverzüglich, direkt und stufenlos erfolgt, ist ein Lastübertragen ohne Eingriffsbewegung in der jeweiligen Position möglich.

Die Lastübertragung aus der jeweiligen Positon ohne Wegverlust hat viele Vorteile:

- Es besteht nicht das Problem wie bei einer Rastverzahnung, wo die Klinke sicher die Zahnlücke finden muß.
- Beim Verrasten einer Klinke gegen einen Zahn entsteht ein Stoß, der bei der Lamellenblockierung nicht vorkommt.
- Beim Unfall ist eine Vorverlagerung des Insassen weitestgehend zu vermeiden. Bei einer Rastverzahnung findet eine Bewegung in der Größenordnung der Zahnteilung statt.
- Bei dem Beispiel gemäß Fig. 4 findet eine automatische Blockierung statt. Es ist kein Ent- und Verrasten mit den damit verbundenen Geräuschen erforderlich.

Die Einleitung eines Unfalls erfolgt nicht immer in Fahrtrichtung. Auch ein Seitencrash kann die Ursache für einen daraus resultierenden Frontalaufprall sein.

Für diese Fälle ist der Einsatz eines Universalsensors sinnvoll, der eine Blockierung einleiten kann bei allen Verzögerungen der Ebene und sogar beim Überschlag.

Die Fig. 5 zeigt ein Kraftübertragungselement mit einem solchen Sensor. Die Sensorkugel 20 als träge Masse ist zwischen zwei Innenkegelflächen gelagert, wobei die obere Bestandteil des schwenkbaren Blockierhebels 25 ist. Die Zugstange 6 hat eine seitlich angebrachte, zusätzliche Sperrverzahnung 16, die aus seitlich ausgeprägten Zähnen oder einer Kunststoff-Zahnleist bestehen kann.

Im Gefahrenfall lenkt die Sensorkugel 20 aus und hebt den Blockierhebel 25 an. Dabei gelangt die Sperrklinke 19 in Eingriff mit der Sperrverzahnung 16 und der Drucknocken gelangt zur Anlage an die Lamellen 1. Wird sodann die Last in der Zugstange 6 aufgebaut, genügt ein Auszug von ca. 2 mm, bis die Lamellen 1 in die Blockierstellung gekippt sind und die Last zu übertragen vermögen. Bei Entlastung setzt eine automatische Deblockierung ein.

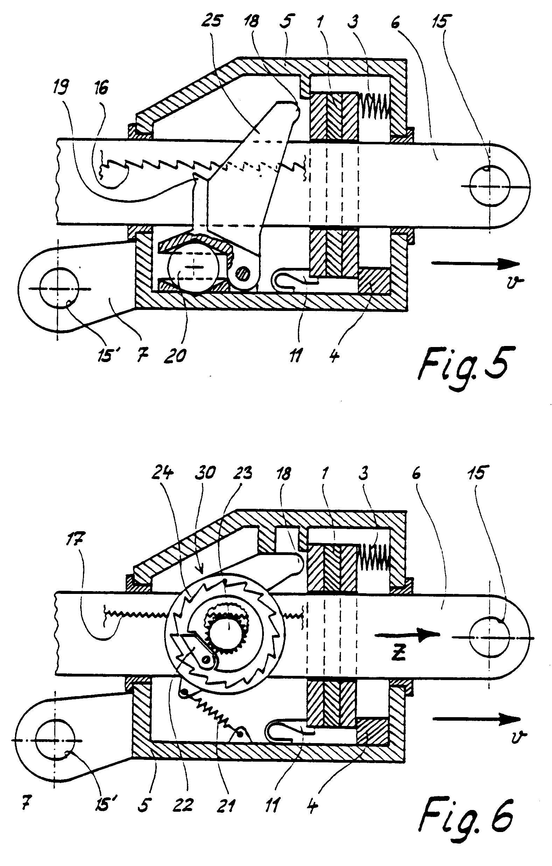

Die Fig. 6 stellt eine weitere Besonderheit dar, bei der unabhängig von einer Fahrtrichtung v und einer Stoßrichtung des Fahrzeugs eine Blockierung in dem Kraftübertragungselement auslösbar ist. Die Ursache einer Blockiereinleitung ist hier die Auszugsbeschleunigung der Zugstange 6 in Richtung Z. Wird bei der Auszugsbewegung ein vorgegebenes Maß für die Beschleunigung überschritten, reagiert das auszugssensitive Auslöseelement 30.

Über ein Ritzel 25 wird von einer Laufverzahnung 17, die seitlich an der Zugstange 6 angeordnet ist, ein an sich bekanntes Trägheitssystem angetrieben. Ein solches System zeigt z.B. die US-PS 4.190.213 oder die DE-OS 28 17 214. Überschreitet die Beschleunigung der Zugstange 6 ein vergegebenes Maß, lenkt eine Blockierklinke 22 aus und greift in eine Blockierverzahnung 14 ein. Gegen eine Feder 21 wird das Auslöseelement 30 mitgedreht. Dabei verschiebt der Drucknocken 18 gegen die Kraft, der Sensorfeder 3 die Lamellen 2 im oberen Bereich. Sie koppen und gelangen in die Blockierstellung.

Bei diesem Kraftübertragungselement kann also das Zugelement 6 mit gleichmäßiger Geschwindigkeit frei verfahren werden. Im Unfall, bei einem plötzlichen Ruck an der Zugstange 6, würde sofort auf kürzestem Wege eine Blockierung der Lamellen 1 eingeleitet werden.

Diese unterschiedlichen Sensorsysteme zur Auslösung einer Blockierung im Kraftübertragungselement lassen sich auch miteinander kombinieren, so daß doppelsensitive Blockiersysteme einsetzbar sind.

Die Kombination der Ausführung nach Fig. 5 und Fig. 6 beispielsweise ergibt ein äußerst universelles und extrem sicheres Blockiersystem. Alle beschriebenen Systeme sind untereinander kombinierbar.

**Patentansprüche**

1. Verstellbares Kraftübertragungselement mit trägheitssensitiver Blockierung, insbesondere für den Einsatz in Fahrzeugen, zum Abfangen schwerer Massen bei Verzögerungen im Gefahrenfall, mit zwei linear gegeneinander verschiebbaren Lastträgern (6, 7) und einer Sensormasse, die sich bei Verzögerung trägheitsbedingt gegen die Kraft einer Sensorfeder (3) bewegt,
   dadurch gekennzeichnet,
   daß die Sensormasse (2) Lamellen (1) beaufschlagt, die benachbart einem der Lastträger (6, 7) kippbar angeordnet sind und sich bei Beaufschlagung in einer Schrägstellung kraftschlüssig gegen den betreffenden Lastträger (6, 7) verklemmen.

2. Kraftübertragungselement nach Anspruch 1,
   dadurch gekennzeichnet,
   daß die Lastträger (6,7) im Ruhezustand außer Eingriff mit den Lamellen (1) sind und frei gegeneinander verschiebbar sind.

3. Kraftübertragungselement nach Anspruch 1 oder 2,
   dadurch gekennzeichnet,
   daß die Lastträger (6,7) im blockierten Zustand auf Zug-und/oder Druck belastbar sind.

4. Kraftübertragungselement nach einem der Ansprüche 1 bis 3,
   dadurch gekennzeichnet,
   daß die Lastträger (6,7) Befestigungsaugen (15,15') haben.

5. Kraftübertragungselement nach einem der Ansprüche 1 bis 4,
   dadurch gekennzeichnet,
   daß beidseitig der Sensormasse (2) relativ zu einer Symmetrieachse (29) je ein Lamellenpaket (1) mit zugehöriger Sensorfeder (3) angeordnet ist.

6. Kraftübertragungselement nach einem der Ansprüche 1 bis 5,
   dadurch gekennzeichnet,
   daß die Sensormasse (2) eine in allen Richtungen einer Ebene ansprechende Sensorkugel (20) ist, die unmittelbar eine Sperrklinke (19) beaufschlagt, und an dem Lastträger (6) in Gestalt einer Zugstange eine Sperrverzahnung (16) angeordnet ist, in welche die beaufschlagte Sperrklinke (19) eingreift, wobei die Sperrklinke (19) mit einem Blockierhebel (25) mit einem die Lamellen (1) infolge Mitnahme durch den Lastträger (6) beaufschlagenden Drucknocken (18) verbunden ist.

7. Verstellbares Kraftübertragungselement mit trägheitssensitiver Blockierung, insbesondere für den Einsatz in Fahrzeugen zum Abfangen schwerer Massen bei Verzögerungen im Gefahrenfall,
gekennzeichnet durch
ein auszugsensitives Auslöseelement (30) zur Beaufschlagung der Lamellen (1), das über ein Ritzel (23) und eine Laufverzahnung (17) mit dem als Zugstange ausgebildeten Lastträger (6) gekoppelt ist und das bei einer ein vorgegebenes Maß überschreitenden Beschleunigung des Lastträgers (6) in Auszugrichtung (Z) aktiviert wird.

8. Kraftübertragungselement nach Anspruch 7,
gekennzeichnet durch
einen trägheitssensitiven Sperrmechanismus mit einer trägheitsmassenaktivierten Blockierklinke (22), die in eine Blockierverzahnung (24) eingreift, welche drehfest mit dem drehbar gelagerten Auslöseelement (30) ist und dieses mitdreht, wobei das Auslöseelement mit einem mitdrehenden Drucknocken (18) verbunden ist, der die Lamellen (1) beaufschlagt.

9. Kraftübertragungselement nach Anspruch 1, 6 oder 7,
dadurch gekennzeichnet,
daß zwei der unterschiedlich wirkenden Auslösesensoren, nämlich der Sensormasse (2), der Sensorkugel (20) oder des Auslöseelementes (30) zu einem doppelt sensitiv wirkenden Blockiermechanismus zusammengefaßt sind.

## Claims

1. Adjustable power transmission element using inertia-sensitive blocking, particularly for use in vehicles, for taking up heavy masses in the event of decelerations in the case of danger, with two load supports (6,7) which are displaceable linearly relative to each other , and with a sensor mass which moves against the force of a sensor spring (3) in the event of deceleration conditioned by inertia,
characterised in that the sensor mass (2) impinges on lamellae (1) which are mounted for tilting movement adjoining one of the load supports (6,7) and which when impinged in an inclined position clamp with force-locking engagement against the relevant load supports (6,7).

2. Power transmission element according to claim 1
characterised in that the load supports (6,7) in the rest position are out of engagement with the lamellae (1) and are freely displaceable relative to each other.

3. Power transmission element according to claim 1 or 2
characterised in that the load supports (6,7) can be loaded in the blocked state with push and/or pull pressure.

4. Power transmission element according to one of claims 1 to 3
characterised in that the load supports (6,7) have fastening eyes (15,15').

5. Power transmission element according to one of claims 1 to 4
characterised in that a lamella parcel (1) with associated sensor spring (5) is mounted either side of the sensor mass (2) relative to an axis of symmetry (29).

6. Power transmission element according to one of claims 1 to 5
characterised in that the sensor mass (2) is a sensor ball (20) responding in all directions of one plane and impinging directly on a locking pawl (19), and a locking gear (16) is mounted on the load support (6) in the form of a pull rod into which the impinged locking pawl (19) engages wherein the locking pawl (19) is connected with a blocking lever (25) with a pressure cam (18) which impinges on the lamellae (1) as a result of entrainment through the load support (6).

7. Adjustable power transmission element using inertia-sensitive blocking, more particularly for use in vehicles for taking up heavy masses in the event of decelerations in the case of danger,
characterised by an extension-sensitive release element (30) for impinging on the lamellae (1) which is coupled by a pinion (23) and a track gear (17) with the load support (6) which is designed as a pull rod wherein in the event of an acceleration of the load support which exceeds a predetermined amount the release element is activated in the extension direction (Z).

**8.** Power transmission element according to claim 7

characterised by an inertia-sensitive locking mechanism with an inertia-mass-activated blocking pawl (22) which engages in a blocking gear (24) which is rotationally secured with the rotatably mounted release element (30) and turns with same wherein the release element is connected to a co-rotating pressure cam (18) which impinges on the lamellae (1).

**9.** Power transmission element according to claim 1, 6 or 7

characterised in that two of the differently acting release sensors, namely the sensor mass (2), the sensor ball (20) or the release element (30) are combined into a double sensitively acting blocking mechanism.

**Revendications**

**1.** Elément réglable de transmission de force avec blocage sensitif à inertie, tout particulièrement destiné à équiper les véhicules automobiles pour intercepter les masses lourdes lors de ralentissement en cas de danger, comprenant deux supports de charge, déplaçables linéairement, l'un vers l'autre, et une masse inerte, mobile contre la force d'un ressort du détecteur en cas de retardement,
caractérisé par le fait
que la masse (2) du détecteur agit sur des lamelles (1), disposées, étant renversables, à proximité des supports de charge (6, 7), qui sont alors bloquées de force contre les supports de charge (6, 7) en question.

**2.** Elément de transmission de force selon revendication 1,
caractérisé par le fait
que les supports de force (6, 7) en position neutre sont hors d'attaque des lamelles (1) et déplaçbles librement l'un vers l'autre.

**3.** Elément de transmission de force selon revendication 1 ou 2,
caractérisé par le fait
que les supports de force (6, 7) en position bloquée peuvent être chargés par traction et/ou pression.

**4.** Elément de transmission de force selon l'une des revendications 1 à 3,
caractérisé par le fait
que les supports de force (6, 7) sont pourvus d'oeillets de fixation (15,15').

**5.** Elément de transmission de force selon l'une des revendications 1 à 4,
caractérisé par le fait
qu'un paquet de lamelles (1) avec ressort (3) afférent est disposé de chacun des deux côtés de la masse (2) du détecteur, par rapport à un axe de symétrie (29).

**6.** Elément de transmission de force selon l'une des revendications 1 à 5,
caractérisé par le fait
que la masse (2) du détecteur est une bille (20) réagissant dans toutes les directions d'un niveau, agissant directement sur un cliquet d'arrêt (19), et que le support de charge (6), sous forme de barre de traction, est pourvu d'une denture de blocage (16), dans laquelle s'engrène le cliquet d'arrêt (19) actionné, lequel est relié à un levier de blocage (25) avec mentonnet de pression (18) agissant sur les lamelles (1) après avoir été entraîné par le support de charge (6).

**7.** Elément réglable de transmission de force avec blocage sensitif par inertie, tout particulièrement destiné à équiper les véhicules automobiles pour intercepter les masses lourdes lors de ralentissement en cas de danger,
caractérisé par le fait
qu'un élément de déclenchement (30) sensible à la traction, agissant sur les lamelles (1), est couplé, par un pignon (23) et une denture de roulement (17), avec le support de charge (6) en forme de barre de traction, et est activé lorsque le support de charge (6) est soumis, dans le sens de traction (Z) à une accélération qui dépasse une grandeur prédéterminée.

**8.** Elément de transmission de force selon revendication 7,
caractérisé par
un système de blocage sensitif à l'inertie avec cliquet d'arrêt (22) activé par masse inerte et mordant dans une denture de blocage (24), tournant solidairement avec l'élément de déclenchement (30), monté pivotable, l'élément de déclenchement étant relié à mentonnet de pression (18), pivotant solidairement et agissant sur les lamelles (1).

**9.** Elément de transmission de force selon revendication 1, 6 ou 7,
caractérisé par le fait
que deux des détecteurs-déclencheurs d'effet différent, en l'occurence: de la masse (2), de la bille (20) ou de l'élément de déclenchement (30) sont réunis pour former un mécanisme de blocage à double effet sensitif.

Fig.1

Fig. 2

Fig. 3

Fig. 4

Fig.5

Fig.6